# FASCICULE DE BREVET EUROPEEN

(11) **EP 3 646 958 B1**
(45) Date de publication et mention de la délivrance du brevet: **25.08.2021**
(21) Numéro de dépôt: 19206403.8
(22) Date de dépôt: 31.10.2019
(51) Int. Cl.: B27H 5/00, C12H 1/22, B27H 5/08, B27M 1/06

(54) **DISPOSITIF DE BOUSINAGE D'UN TONNEAU**
VORRICHTUNG ZUM AUSBRENNEN EINES FASSES
DEVICE FOR TOASTING A CASK

(30) Priorité: 31.10.2018 FR 1860080
(43) Date de publication de la demande: 06.05.2020
(73) Titulaire: Thomas Wines Management France, 33000 Bordeaux (FR)
(72) Inventeur: MOUSSIE, Thomas, 33700 MERIGNAC (FR)
(74) Mandataire: Delorme, Nicolas

(56) Documents cités:
- EP-A1- 1 411 114
- FR-A- 558 735
- FR-A1- 2 662 967
- US-B1- 6 755 156

## Description

La présente invention concerne le domaine de la préparation de tonneaux en bois, notamment destinés à la vinification. Une machine permettant la modification de la composition chimique de la face interne d'un fût par un procédé de bousinage est connue du document FR2662967.

Le bousinage ou le toastage est une étape cruciale dans la préparation de tonneaux en bois. Cette étape permet de griller le bois de sorte que le tonneau puisse aromatiser en tannins et saveurs boisées la boisson alcoolisée qu'il contient. Les arômes apportés par le bois sont multiples et dépendent de la cuisson œnologique qu'il a subie. Toutefois, selon le procédé de bousinage utilisé, différentes substances toxiques sont produites. Dans le cas du brasero par exemple, ces substances sont retrouvées dans la fumée montante qui atteint le tonneau disposé verticalement au-dessus du brasero. Dans cette configuration, certaines de ces substances viennent imprégner le bois du tonneau. Or, la boisson alcoolisée qui est stockée ensuite dans le tonneau dissout la grande majorité de ces toxines dont une quantité importante est reconnue comme étant nocive pour la santé. Une méthode connue utilise un dispositif de chauffe générant moins de substances toxiques, notamment par l'utilisation d'énergie électrique. Toutefois, la configuration des éléments, le système de de chauffage et d'humidification ne sont pas optimales, ce qui influence la qualité du bousinage et les propriétés organoleptiques du tonneau.

L'un des buts de la présente invention est de pallier au moins l'un de ces inconvénients. A cet effet, la présente invention propose un dispositif destiné à préparer un tonneau en bois, le dispositif comprenant :
- une enceinte s'étendant dans une direction longitudinale sensiblement horizontale et autour de laquelle le tonneau est destiné à être placé,
- un système de projection d'eau disposé dans l'enceinte et configuré pour projeter de l'eau à l'intérieur de l'enceinte, et
- un appareil de chauffe disposé dans l'enceinte et configuré pour chauffer l'enceinte et pour générer un flux de vapeur d'eau à partir de l'eau projetée,
l'enceinte présentant une surface externe configurée pour réaliser un échange thermique avec le tonneau et un passage du flux de vapeur d'eau en direction du tonneau.

Ainsi, la configuration de ce dispositif permet à la fois de chauffer le tonneau de façon régulière grâce à la forme longitudinale de l'enceinte qui est placée à l'horizontale, ce qui évite de plus l'effet cheminée. Par ailleurs, le dispositif permet également d'humidifier le tonneau pendant la chauffe depuis l'intérieur de l'enceinte, de sorte à maintenir le taux d'hygrométrie des douelles de façon efficace. La présente invention propose ainsi un dispositif amélioré de bousinage des tonneaux de vinification.

Selon une disposition, la surface externe de l'enceinte présente une forme globalement semi-cylindrique, ou une forme dite 'en berceau', de sorte à se conformer à la forme du tonneau globalement cylindrique et éviter les déperditions en chaleur et en vapeur d'eau. La longueur de l'enceinte est de préférence au moins égale à la longueur du tonneau, de sorte que l'enceinte est apte à chauffer uniformément le bois du tonneau.

Avantageusement, le dispositif de l'invention comprend un élément de fixation configuré pour fixer l'enceinte à un mur, l'élément de fixation au mur comprenant un moyen de fixation rattaché à un cadre, ledit cadre étant configuré pour supporter l'enceinte, fixement et de façon sensiblement horizontale. La configuration de cet élément de fixation permet de laisser un espace pour l'insertion du tonneau à l'horizontale, entre le sol et l'enceinte. L'élément de fixation est configuré pour permettre la fixation de l'enceinte et son contenu (système de projection d'eau, appareil de chauffe) à un mur ou tout élément vertical suffisamment résistant mécaniquement.

De préférence, le dispositif de l'invention comprend un support de tonneau configuré pour supporter le tonneau, le support de tonneau comprenant des éléments d'entrainement en rotation configurés pour entraîner en rotation le tonneau placé autour de l'enceinte, autour de l'axe longitudinal de l'enceinte. Ainsi, l'enceinte chauffe l'environnement de façon homogène et la rotation permet à toutes les régions circonférentielles du tonneau d'être exposées sensiblement à la même température.

Avantageusement, le support de tonneau comprend en outre un système de vérin hydraulique configuré pour surélever le tonneau jusqu'à atteindre la hauteur de l'enceinte en vue de placer le tonneau autour de l'enceinte.

Selon une disposition, le support de tonneau est configuré pour être mobile de sorte à faciliter le déplacement du tonneau disposé sur le support.

Selon une disposition, l'enceinte est délimitée extérieurement par une première plaque de forme globalement semi-cylindrique et est délimitée intérieurement par une deuxième plaque de forme globalement semi-cylindrique, la deuxième plaque présentant un rayon de courbure inférieur au rayon de courbure de la première plaque, la première plaque étant espacée de la deuxième plaque de sorte à délimiter un logement de réception.

Selon une disposition, la première plaque et la deuxième plaque sont chacune constituées par des plaques métalliques ajourées et configurées pour réaliser un échange thermique homogène et un passage homogène de la vapeur d'eau en direction du tonneau placé autour de l'enceinte. Typiquement l'ajourage des plaques est régulier et les orifices varient entre 2 et 10 mm de diamètre et de préférence entre 3 mm et 8 mm de diamètre.

Selon une possibilité, l'appareil de chauffe comprend au moins une résistance électrique s'étendant dans le logement de réception. Ainsi, le dispositif selon l'invention évite la production de substances toxiques formées lors de l'utilisation d'un brasero. L'au moins une résistance électrique est configurée dans l'enceinte pour permettre un échange thermique sensiblement uniforme avec le tonneau. Selon l'invention, tous les points de la surface intérieure du tonneau sont chauffés sensiblement à la même température au cours du bousinage. Autrement dit, la différence de température entre différents points de la surface intérieure ne dépasse pas 20°C tout au long du bousinage.

La puissance de l'appareil de chauffe est prévue de sorte à pouvoir atteindre au moins 300°C dans l'enceinte.

L'au moins une résistance électrique s'étend dans une moitié inférieure du logement de réception et de préférence l'au moins une résistance électrique s'étend en suivant la forme semi-cylindrique de la deuxième plaque.

Selon une possibilité, l'appareil de chauffe est formé d'une pluralité de résistances réparties uniformément et s'étendant longitudinalement dans le logement de réception.

Selon une variante de réalisation, l'appareil de chauffe est formé d'une pluralité de résistances réparties uniformément et s'étendant selon la largeur du logement de réception.

De préférence, le système de projection d'eau comprend au moins un tuyau d'amenée d'eau, doté de micro-perforations configurées pour projeter de l'eau dans le logement de réception. Le tuyau d'amenée d'eau est constitué en un matériau résistant à l'oxydation par l'eau à des températures élevées, au moins 300°C. Le matériau est avantageusement de l'acier inox. Les micro-perforations présentent une dimension variable entre 0.5 et 5 mm et de préférence entre 1 et 3 mm de sorte que l'eau liquide se vaporise rapidement et que l'humidification est efficace.

Selon une possibilité, le système de projection d'eau comprend une pluralité de tuyaux d'amenée d'eau répartie uniformément et s'étendant selon une direction longitudinale, dans une moitié supérieure du logement de réception et suivant la forme semi-cylindrique de la première plaque. L'alimentation en eau du système de projection est configurée pour fournir de l'eau dépourvue de polluants, par exemple de l'eau de source ou de l'eau traitée potable.

Selon une variante, le système de projection d'eau comprend une pluralité de tuyaux d'amenée d'eau répartie uniformément dans le sens de la largeur du logement de réception.

Selon une possibilité, le dispositif comprend des pierres issues de minéraux naturels, les pierres étant disposées dans le logement de réception autour de l'appareil de chauffe et du système de projection d'eau de sorte à remplir au moins en partie le logement de réception et choisies parmi des pierres à forte capacité thermique, telle que la pierre de Jade (jadéite ou le kosmochlor, et la néphrite) qui est également un excellent conducteur thermique.

De préférence, le dispositif comprend des pierres de lave disposées dans le logement de réception autour de l'appareil de chauffe et du système de projection d'eau, de sorte à remplir au moins en partie le logement de réception. Ces pierres de lave permettent d'emmagasiner la chaleur produite par le dispositif de chauffe et de la restituer longuement après. Les variations thermiques sont ainsi moins brutales que lorsque de simples résistances sont utilisées, ce qui est économique et bénéfique au bousinage. Par l'expression 'pierre de lave', il est entendu dans le présent document de la pierre de lave naturelle, non traitée, issue du magma terrestre, telle que du basalte, par opposition à de la pierre de lave émaillée ou de la pierre de synthèse qui contient des résines, des pigments etc...ou autres impuretés pouvant conduire à transmettre des substances toxiques au tonneau.

Par ailleurs, l'eau projetée dans le logement de réception génèrent de la vapeur d'eau au contact des pierres de lave chauffée. Ainsi, le bois du tonneau conserve son hygrométrie initiale malgré le traitement thermique et son étanchéité. Dans le même temps se produit un échange minéral de sorte que la vapeur d'eau se charge en minéraux contenus naturellement dans les pierres de lave. La vapeur d'eau est ensuite absorbée par les pores du bois dans lesquels les minéraux se déposent. Une fois la préparation du tonneau finalisée, il reçoit une boisson alcoolisée dans laquelle certains des minéraux vont migrer et venir le parfumer.

Avantageusement, le dispositif comprend au moins une sonde de température disposée à proximité de la surface externe de l'enceinte de sorte à être localisée entre l'enceinte et un tonneau placé autour de l'enceinte, et un dispositif de commande configuré pour recevoir au moins une information de température transmise par l'au moins une sonde de température, le dispositif de commande étant connecté à une alimentation en eau du système de projection d'eau et à l'appareil de chauffe et configuré pour appliquer des consignes de température à l'appareil de chauffe et de phase de projections d'eau au système de projection d'eau selon les informations de température reçues.

Selon une possibilité, les éléments d'entrainement en rotation sont constitués d'au moins deux paires de roues disposées sur le support de tonneau et configurées pour recevoir et entrainer en rotation le tonneau placé autour de l'enceinte.

D'autres aspects, buts et avantages de la présente invention apparaîtront mieux à la lecture de la description suivante d'un mode de réalisation de celle-ci, donné à titre d'exemple non limitatif et fait en référence aux dessins annexés. Les figures ne respectent pas nécessairement l'échelle de tous les éléments représentés de sorte à améliorer leur lisibilité. Dans la suite de la description, par souci de simplification, des éléments identiques, similaires ou équivalents des différentes formes de réalisation portent les mêmes références numériques.
La figure 1 illustre une vue schématique en perspective de l'avant d'un dispositif selon un mode de réalisation de la présente invention.
La figure 2 illustre une vue schématique partielle de l'arrière du dispositif selon le mode de réalisation de la présente invention illustré à la figure 1.
La figure 3 illustre une vue en perspective de l'intérieur du dipositif selon le mode de réalisation illustré à la figure 1.
La figure 4 illustre une vue partielle de l'arrière du dispositif selon le mode de réalisation illustré à la figure 1.
La figure 5 illustre une vue en section de l'enceinte du dispositif comprenant des pierres de lave selon le mode de réalisation illustré à la figure 1.

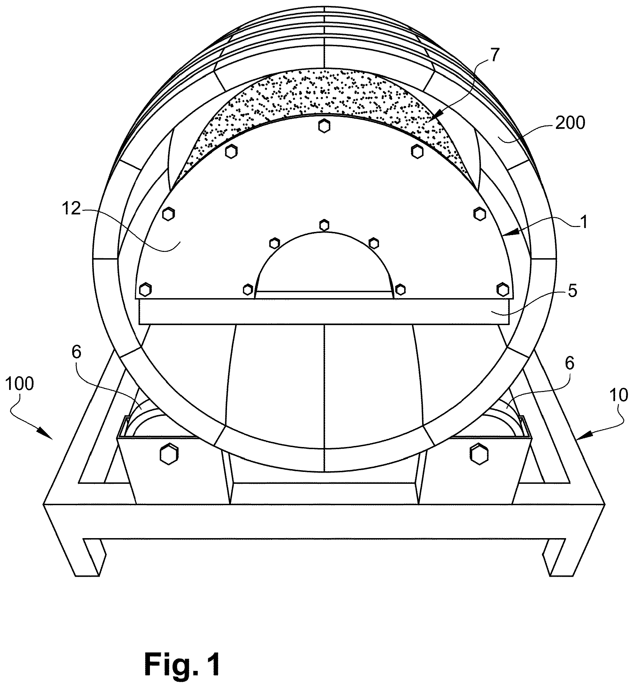

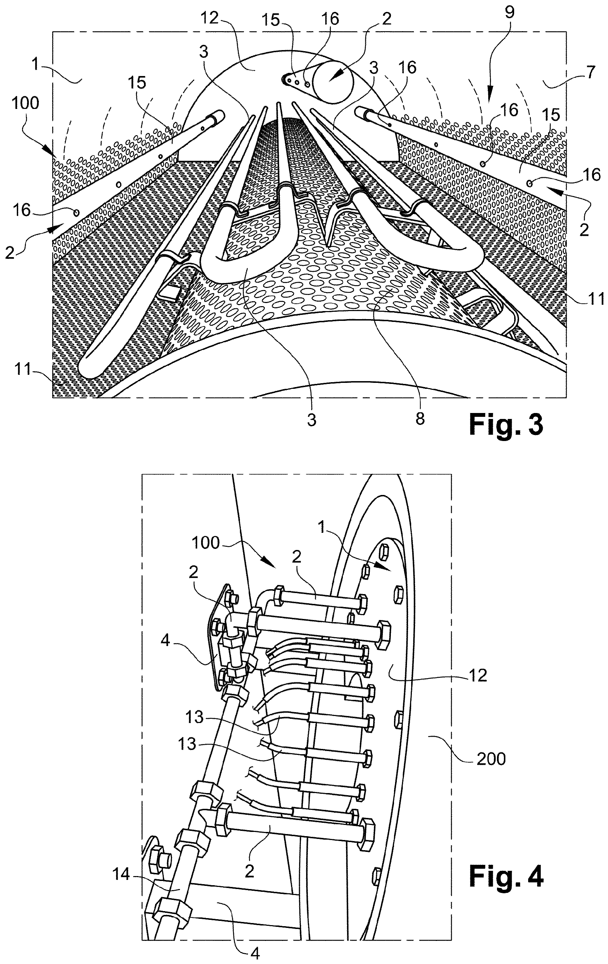

Comme illustré à la figure 1, le dispositif 100 comprend une enceinte 1 s'étendant dans une direction longitudinale sensiblement horizontale et autour de laquelle le tonneau 200 est destiné à être placé. A cet effet, la surface externe de l'enceinte 1 présente une forme semi-cylindrique, ou autrement dit un cylindre coupé diamétralement selon la direction longitudinale. Un système de projection d'eau 2 et un appareil de chauffe 3 sont disposés dans l'enceinte 1 de sorte à chauffer et générer un flux de vapeur d'eau à l'intérieur de l'enceinte 1 (figure 3). L'enceinte 1 présente des dimensions appropriées pour réaliser un échange thermique avec la totalité de la surface du tonneau 200; sa longueur est notamment égale à celle du tonneau 200. Egalement illustré sur la figure 1, le dispositif 100 comprend un élément de fixation 4 (figure 4) configuré pour fixer l'enceinte 1 à un mur. L'élément de fixation 4 comprend un moyen de fixation (non visible sur les figures) attaché à un cadre 5, ledit cadre 5 étant configuré pour supporter l'enceinte 1, fixement et de façon sensiblement horizontale à toute hauteur du mur.

Le dispositif 100 comprend également un support de tonneau 10 comprenant en outre un système de vérin hydraulique (non illustré) configuré pour surélever le tonneau jusqu'à atteindre la hauteur de l'enceinte 1 en vue de placer le tonneau 200 autour de l'enceinte 1. Le support de tonneau 10 comprend également des éléments d'entrainement en rotation 6 du tonneau 200, tel que deux paires de roues disposées sur le support de tonneau 10 sous des régions extrémités longitudinales de l'enceinte 1. Ces éléments d'entrainement 6 entrainent le tonneau 200 en rotation autour de l'axe longitudinal de l'enceinte 1. La rotation est relativement lente, elle présente par exemple une vitesse d'environ 1 km/h. Il est ainsi possible de prévoir une multitude d'enceintes 1 à différentes hauteurs d'un mur, et suffisamment espacées pour la disposition d'un tonneau 200 autour de chacune des enceintes, grâce au support de tonneau 10 permettant la surélévation du tonneau 200. Les rendements peuvent être ainsi grandement améliorés. Il est également possible de prévoir des enceintes 1 dédiées à chacune des tailles de tonneau 200. Ceux-ci peuvent présenter un volume variable, par exemple 225L, 228L, 300L, 400L, 500L ou 600L et les proportions de l'enceinte 1, du système de projection d'eau 2 et du dispositif de chauffe 3 sont adaptées en fonction.

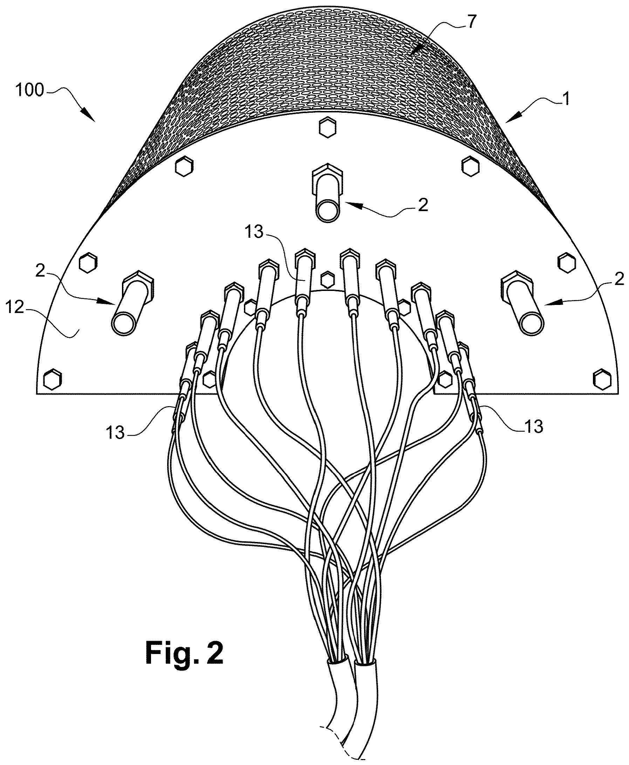

Comme visible sur les figures 1 à 3, l'enceinte 1 est délimitée extérieurement par une première plaque 7 de forme globalement semi-cylindrique et ajourée. Intérieurement, l'enceinte 1 est également délimitée par une deuxième plaque 8, de forme globalement semi-cylindrique, qui est ajourée, et dont le rayon de courbure est inférieur à celui de la première plaque 7 (figure 3). La première plaque 7 est distante de la deuxième plaque 8 de sorte à délimiter un logement de réception 9 conçu pour recevoir le système de projection d'eau 2 et l'appareil de chauffe 3. Chacun des bords longitudinaux de la première plaque 7 est relié à un bord longitudinal respectif sous-jacent de la deuxième plaque 8 par une plaque plane 11 également ajourée (figure 3). L'ensemble de la première plaque 7, de la deuxième plaque 8 et des deux plaques planes 11 sont en métal et participent à réaliser un échange thermique homogène avec le tonneau 200. Lesdites plaques planes 11 permettent également le passage d'un flux de vapeur d'eau en direction du tonneau 200. Chacun des bords latéraux de la première plaque 7 et de la deuxième plaque 8 sont également reliés deux à deux par une plaque latérale 12 plane permettant de fermer l'enceinte 1 et d'éviter les déperditions de chaleur et de vapeur d'eau (figures 1, 2 et 4). L'une de ces plaques latérales 12 est traversée par des alimentations électriques 13 de l'appareil de chauffe 3. L'appareil de chauffe 3 est formé par des résistances électriques s'étendant longitudinalement et uniformément dans le logement de réception 9. Ladite plaque latérale 12 comprend également des connections entre une alimentation en eau 14 et le système de projection d'eau 2 (figure 4). Le système de projection d'eau 2 est formé par des tuyaux d'amenée d'eau 15 qui s'étendent longitudinalement et uniformément dans le logement de réception 9. Ces tuyaux d'amenée d'eau 15 sont dotés de micro-perforations 16 d'eau permettant la projection uniforme d'eau dans le logement de réception 9. Selon une disposition non illustrée, l'appareil de chauffe 3 comprend une seule résistance électrique répartie uniformément dans le logement de réception 9 de sorte à chauffer l'enceinte 1 de manière homogène. Selon une variante de réalisation non illustrée, le système de projection d'eau 2 comprend un seul tuyau d'amenée d'eau 15, qui s'étend uniformément dans le logement de réception 9 pour permettre le passage de flux de vapeur d'eau de façon homogène en direction du tonneau 200.

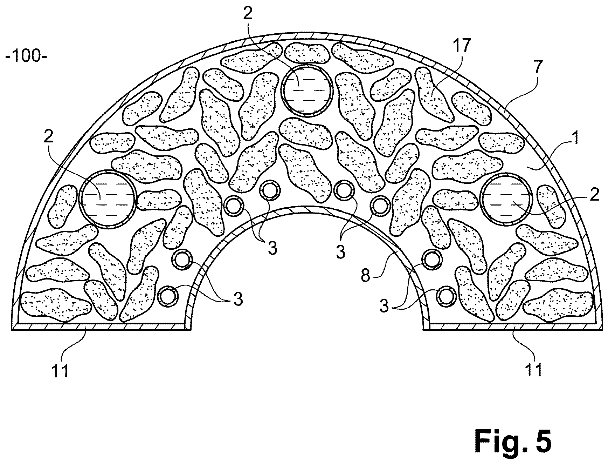

Selon une disposition visible sur la figure 5, le logement de réception 9 est rempli de pierres de lave 17 naturelles disposées autour du système de projection d'eau 2 et des résistances électriques. La présence de ces pierres de lave 17 permet une augmentation homogène de la température dans l'enceinte 1 sans créer de molécules toxiques lors des périodes de montées en température. La propriété des pierres de lave 17 à accumuler puis à restituer de la chaleur permet également de diminuer la consommation électrique des résistances électriques, notamment lors de phases de plateau de température.

L'eau projetée à partir des micro-perforations 16 du système de projection d'eau 2 entre en contact avec les pierres de lave 17 dont la chaleur permet de la vaporiser en flux de vapeur permettant d'humidifier le bois du tonneau 200. En effet, le tonneau 200 est soumis à des cycles de températures élevées ce qui peut l'assécher en entraînant une perte d'étanchéité au niveau des douelles. La vapeur d'eau permet ainsi de maintenir l'humidité originale dans le bois du tonneau 200. Par ailleurs, un échange de minéraux a lieu entre les pierres de lave 17 et l'eau qui entre à son contact. La vapeur d'eau est ensuite absorbée dans les pores du bois et libère ces minéraux, ce qui améliore encore les propriétés organoleptiques du tonneau 200.

Selon une disposition non illustrée, la présente invention comporte une sonde de température et un dispositif de commande configuré pour commander une alimentation en eau du système de projection d'eau 2 et la puissance de l'appareil de chauffe 3 sur la base d'une information de température reçue de la sonde de température. Cette sonde est disposée à proximité de la surface externe de l'enceinte 1, de sorte à être localisée entre l'enceinte 1 et un tonneau 200 placé autour de l'enceinte 1. Cette sonde donne une bonne estimation de la température directement appliquée au bois du tonneau 200. Celui-ci étant entrainé en rotation, la température est sensiblement constante en différents points, même pour une portion du tonneau 200 éloignée de l'appareil de chauffe 3.

Le dispositif de commande est également configuré pour régler la vitesse de rotation des éléments d'entrainement en rotation 6 et pour appliquer les différentes phases dans un cycle de bousinage. Le dispositif de commande, en faisant appliquer des consignes de températures, permet de réaliser des montées en température selon des rampes prédéterminées, comme des plateaux ou des descentes en température, selon le cycle choisi par un utilisateur.

Ainsi, la présente invention permet un bousinage de tonneaux 200 à température homogène, sans générer ni imprégner le bois de substances toxiques. L'utilisation de pierres de lave 17 naturelles, qui sont dénuées de polluant par nature, permet de restituer et de stabiliser la température plus longtemps que si des résistances électriques étaient uniquement utilisées. Ainsi, le dispositif 100 contribue à l'éco-environnement par une cuisson du bois uniforme et qui permet l'absorption d'une forte teneur en minéraux. Ceci confère un profil aromatique très particulier au tonneau 200 qui parfumera à son tour l'alcool qui y sera contenu.

Il va de soi que la présente invention n'est pas limitée aux modes de réalisation décrits ci-dessus à titre d'exemples mais qu'elle comprend tous les équivalents techniques et les variantes des moyens décrits ainsi que leurs combinaisons.

## Revendications

1. Dispositif (100) destiné à bousiner un tonneau (200) en bois destiné à la vinification, le dispositif (100) comprenant :
- une enceinte (1) s'étendant dans une direction longitudinale sensiblement horizontale et autour de laquelle le tonneau (200) est destiné à être placé,
- un système de projection d'eau (2) disposé dans l'enceinte (1) et configuré pour projeter de l'eau à l'intérieur de l'enceinte (1), et
- un appareil de chauffe (3) disposé dans l'enceinte (1) et configuré pour chauffer l'enceinte (1) et pour générer un flux de vapeur d'eau à partir de l'eau projetée,
l'enceinte (1) présentant une surface externe configurée pour réaliser un échange thermique avec le tonneau (200) et un passage du flux de vapeur d'eau en direction du tonneau (200).

2. Dispositif (100) selon la revendication 1, dans lequel la surface externe de l'enceinte (1) présente une forme globalement semi-cylindrique.

3. Dispositif (100) selon l'une des revendications 1 à 2, comprenant un élément de fixation (4) configuré pour fixer l'enceinte à un mur, l'élément de fixation (4) au mur comprenant un moyen de fixation rattaché à un cadre (5), ledit cadre (5) étant configuré pour supporter l'enceinte (1), fixement et de façon sensiblement horizontale.

4. Dispositif (100) selon l'une des revendications 1 à 3, comprenant un support de tonneau (10) configuré pour supporter un tonneau (200), le support de tonneau (10) comprenant des éléments d'entrainement en rotation (6) configurés pour entrainer en rotation le tonneau (200) placé autour de l'enceinte (1), autour de l'axe longitudinal de l'enceinte (1).

5. Dispositif (100) selon l'une des revendications 1 à 4, dans lequel l'enceinte (1) est délimitée extérieurement par une première plaque (7) de forme globalement semi-cylindrique et est délimitée intérieurement par une deuxième plaque (8) de forme globalement semi-cylindrique, la deuxième plaque (8) présentant un rayon de courbure inférieur au rayon de courbure de la première plaque (7), la première plaque (7) étant espacée de la deuxième plaque (8) de sorte à délimiter un logement de réception (9).

6. Dispositif (100) selon la revendication 5, dans lequel la première plaque (7) et la deuxième plaque (8) sont chacune constituées par des plaques métalliques ajourées et configurées pour réaliser un échange thermique homogène et un passage homogène de la vapeur d'eau en direction du tonneau (200) placé autour de l'enceinte (1).

7. Dispositif (100) selon l'une des revendications 1 à 6, dans lequel l'appareil de chauffe (3) comprend au moins une résistance électrique s'étendant dans le logement de réception (9).

8. Dispositif (100) selon l'une des revendications 1 à 7, dans lequel le système de projection d'eau (2) comprend au moins un tuyau d'amenée d'eau doté de micro-perforations (16) configurées pour projeter de l'eau uniformément dans le logement de réception (9).

9. Dispositif (100) selon l'une des revendications 1 à 8, dans lequel des pierres de lave (17) sont disposées dans le logement de réception (9) autour de l'appareil de chauffe (3) et du système de projection d'eau (2), de sorte à remplir au moins en partie le logement de réception (9).

10. Dispositif (100) selon l'une des revendications 1 à 9, comprenant au moins une sonde de température disposée à proximité de la surface externe de l'enceinte (1) de sorte à être localisée entre l'enceinte (1) et un tonneau (200) placé autour de l'enceinte (1), et un dispositif de commande configuré pour recevoirau moins une information de température transmise par l'au moins une sonde de température, le dispositif de commande étant connecté à une alimentation en eau du système de projection d'eau (2) et à l'appareil de chauffe (3) et configuré pour appliquer des consignes de température à l'appareil de chauffe (3) et des phases de projections d'eau au système de projection d'eau (2) selon les informations de température reçues.

11. Dispositif (100) selon l'une des revendications 1 à 10 combinée à la revendication 4, dans lequel le support de tonneau (10) comprend en outre un système de vérin hydraulique configuré pour surélever le tonneau (200) jusqu'à atteindre la hauteur de l'enceinte (1) en vue de placer le tonneau (200) autour de l'enceinte (1).

12. Dispositif (100) selon l'une des revendications 1 à 11, dans lequel des pierres de Jade sont disposées dans le logement de réception (9) autour de l'appareil de chauffe (3) et du système de projection d'eau (2), de sorte à remplir au moins en partie le logement de réception (9).

## Patentansprüche

1. Vorrichtung (100), die zum Ausbrennen eines Fasses (200) aus Holz bestimmt ist, das zur Weinbereitung bestimmt ist, wobei die Vorrichtung (100) umfasst:
- ein Gehäuse (1), das sich in einer im Wesentlichen horizontalen Längsrichtung erstreckt, und um das herum das Fass (200) bestimmt ist, platziert zu werden,
- ein Wasserprojektionssystem (2), das in dem Gehäuse (1) angeordnet ist und konfiguriert ist, um Wasser ins Innere des Gehäuses (1) zu projizieren, und
- ein Heizgerät (3), das in dem Gehäuse (1) angeordnet ist und konfiguriert ist, um das Gehäuse (1) zu beheizen und um einen Wasserdampfstrom aus dem projizierten Wasser zu erzeugen,
wobei das Gehäuse (1) eine Außenoberfläche aufweist, die konfiguriert ist, um einen Wärmetausch mit dem Fass (200) und einen Durchgang des Wasserdampfstroms in Richtung des Fasses (200) zu realisieren.

2. Vorrichtung (100) nach Anspruch 1, wobei die Außenoberfläche des Gehäuses (1) eine im Allgemeinen halbzylindrische Form aufweist.

3. Vorrichtung (100) nach einem der Ansprüche 1 bis 2, ein Befestigungselement (4) umfassend, das konfiguriert ist, um das Gehäuse an einer Wand zu befestigen, wobei das Befestigungselement (4) an der Wand ein Befestigungsmittel umfasst, das einem Rahmen (5) zugeordnet ist, wobei der Rahmen (5) konfiguriert ist, um das Gehäuse (1) fest und im Wesentlichen horizontal zu stützen.

4. Vorrichtung (100) nach einem der Ansprüche 1 bis 3, eine Fassstütze (10) umfassend, die konfiguriert ist, um ein Fass (200) zu stützen, wobei die Fassstütze (10) Drehantriebselemente (6) umfasst, die konfiguriert sind, um das Fass (200), das um das Gehäuse (1) herum platziert ist, in Drehung um die Längsachse des Gehäuses (1) herum anzutreiben.

5. Vorrichtung (100) nach einem der Ansprüche 1 bis 4, wobei das Gehäuse (1) außen durch eine erste Platte (7) in einer im Allgemeinen halbzylindrischen Form begrenzt wird, und innen durch eine zweite Platte (8) in einer im Allgemeinen halbzylindrischen Form begrenzt wird, wobei die zweite Platte (8) einen Krümmungsradius aufweist, der kleiner als der Krümmungsradius der ersten Platte (7) ist, wobei die erste Platte (7) von der zweiten Platte (8) derart beabstandet ist, um eine Ablage zur Aufnahme (9) zu begrenzen.

6. Vorrichtung (100) nach Anspruch 5, wobei die erste Platte (7) und die zweite Platte (8) jeweils durch Metallplatten gebildet sind, die gelocht und konfiguriert sind, um einen gleichförmigen Wärmetausch und einen gleichförmigen Durchgang des Wasserdampfes in Richtung des Fasses (200) zu realisieren, das um das Gehäuse (1) herum platziert ist.

7. Vorrichtung (100) nach einem der Ansprüche 1 bis 6, wobei das Heizgerät (3) mindestens einen elektrischen Widerstand umfasst, der sich in der Ablage zur Aufnahme (9) erstreckt.

8. Vorrichtung (100) nach einem der Ansprüche 1 bis 7, wobei das Wasserprojektionssystem (2) mindestens ein Wasserzuführungsrohr umfasst, das mit Mikroperforationen (16) versehen ist, die konfiguriert sind, um Wasser gleichmäßig in die Ablage zur Aufnahme (9) zu projizieren.

9. Vorrichtung (100) nach einem der Ansprüche 1 bis 8, wobei Lavasteine (17) in der Ablage zur Aufnahme (9) um das Heizgerät (3) und das Wasserprojektionssystem (2) herum angeordnet sind, um die Ablage zur Aufnahme (9) mindestens teilweise zu füllen.

10. Vorrichtung (100) nach einem der Ansprüche 1 bis 9, mindestens eine Temperatursonde umfassend, die in der Nähe der Außenoberfläche des Gehäuses (1) angeordnet ist, um zwischen dem Gehäuse (1) und einem Fass (200), das um das Gehäuse (1) herum platziert ist, gelegen zu sein, und eine Steuerungsvorrichtung, die konfiguriert ist, um mindestens eine Temperaturinformation zu empfangen, die durch die mindestens eine Temperatursonde übertragen wird, wobei die Steuerungsvorrichtung mit einer Wasserversorgung des Wasserprojektionssystems (2) und dem Heizgerät (3) verbunden ist und konfiguriert ist, um entsprechend den empfangenen Temperaturinformationen Temperatursollwerte auf das Heizgerät (3), und Wasserprojektionsphasen auf das Wasserprojektionssystem (2) anzuwenden.

11. Vorrichtung (100) nach einem der Ansprüche 1 bis 10, in Kombination mit Anspruch 4, wobei die Fassstütze (10) weiter ein Hydraulikzylindersystem umfasst, das konfiguriert ist, um das Fass (200) bis zum Erreichen der Höhe des Gehäuses (1) anzuheben, um das Fass (200) um das Gehäuse (1) herum zu platzieren.

12. Vorrichtung (100) nach einem der Ansprüche 1 bis 11, wobei Jade-Steine in der Ablage zur Aufnahme (9) um das Heizgerät (3) und das Wasserprojektionssystem (2) herum angeordnet sind, um die Ablage zur Aufnahme (9) mindestens teilweise zu füllen.

## Claims

1. A device (100) intended to toast a wooden barrel (200) intended for winemaking, the device (100) comprising:
- an enclosure (1) extending in a substantially horizontal longitudinal direction and around which the barrel (200) is intended to be placed,
- a water spraying system (2) disposed in the enclosure (1) and configured to spray water inside the enclosure (1), and
- a heating apparatus (3) disposed in the enclosure (1) and configured to heat the enclosure (1) and to generate a water vapor stream from the sprayed water,
the enclosure (1) having an outer surface configured to carry out a heat exchange with the barrel (200) and a passage for the water vapor stream in the direction of the barrel (200).

2. The device (100) according to claim 1, wherein the outer surface of the enclosure (1) has a generally semi-cylindrical shape.

3. The device (100) according to any of claims 1 to 2, comprising a fastening element (4) configured to fasten the enclosure to a wall, the element (4) for fastening to the wall comprising a fastening means attached to a frame (5), said frame (5) being configured to support the enclosure (1), fixedly and in substantially horizontal manner.

4. The device (100) according to any of claims 1 to 3, comprising a barrel support (10) configured to support a barrel (200), the barrel support (10) comprising rotating drive elements (6) configured to rotatably drive the barrel (200) placed around the enclosure (1), about the longitudinal axis of the enclosure (1).

5. The device (100) according to any of claims 1 to 4, wherein the enclosure (1) is externally delimited by a first plate (7) with a generally semi-cylindrical shape and is internally delimited by a second plate (8) with a generally semi-cylindrical shape, the second plate (8) having a radius of curvature smaller than the radius of curvature of the first plate (7), the first plate (7) being spaced apart from the second plate (8) so as to delimit a receiving housing (9).

6. The device (100) according to claim 5, wherein each of the first plate (7) and second plate (8) is constituted by perforated metal plates and configured to carry out a homogeneous heat exchange and a homogeneous passage of the water vapor in the direction of the barrel (200) placed around the enclosure (1).

7. The device (100) according to any of claims 1 to 6, wherein the heating apparatus (3) comprises at least one electrical resistance extending into the receiving housing (9).

8. The device (100) according to any of claims 1 to 7, wherein the water spraying system (2) comprises at least one water supply hose provided with micro-perforations (16) configured to spray water evenly in the receiving housing (9).

9. The device (100) according to any of claims 1 to 8, wherein lava stones (17) are disposed in the receiving housing (9) around the heating apparatus (3) and the water spraying system (2), so as to fill at least partially the receiving housing (9).

10. The device (100) according to any of claims 1 to 9, comprising at least one temperature probe disposed proximate to the outer surface of the enclosure (1) so as to be located between the enclosure (1) and a barrel (200) placed around the enclosure (1), and a control device configured to receive at least one temperature information transmitted by the at least one temperature probe, the control device being connected to a water supply of the water spraying system (2) and to the heating apparatus (3) and configured to apply temperature setpoints to the heating apparatus (3) and phases of water spraying to the water spraying system (2) according to the received temperature information.

11. The device (100) according to any of claims 1 to 10 combined with claim 4, wherein the barrel support (10) further comprises a hydraulic cylinder system configured to raise the barrel (200) until reaching the height of the enclosure (1) in order to place the barrel (200) around the enclosure (1).

12. The device (100) according to any of claims 1 to 11, wherein Jade stones are disposed in the receiving housing (9) around the heating apparatus (3) and the water spraying system (2), so as to fill at least partially the receiving housing (9).
